# EUROPEAN PATENT SPECIFICATION

(11) **EP 2 011 580 B1**
(45) Date of publication and mention of the grant of the patent: **29.07.2015**
(21) Application number: 08101507.5
(22) Date of filing: 12.02.2008
(51) Int. Cl.: A01K 1/01, B01F 7/06, B09B 3/00

(54) **Blending Device**
Mischvorrichtung
Dispositif de mélange

(30) Priority: 03.07.2007 TW 96124223; 04.07.2007 TW 96124276
(43) Date of publication of application: 07.01.2009
(73) Proprietor: Twu, Yann-Bor, Taipei (TW)
(72) Inventor: Twu, Yann-Bor, Taipei (TW)
(74) Representative: 2K Patentanwälte Blasberg Kewitz & Reichel

(56) References cited:
- WO-A-2006/011727
- DE-A1- 19 843 268
- GB-A- 1 316 202
- NL-A- 7 603 631
- US-A- 3 665 521
- US-A- 3 871 331
- US-A- 4 196 693
- US-A- 4 319 366
- US-A- 4 502 413
- US-A- 5 289 799
- US-A- 5 307 917
- US-A- 5 592 900
- US-A- 5 732 419
- US-A- 6 082 302
- US-A1- 2007 125 306
- US-B2- 6 561 132

## Description

### BACKGROUND OF THE INVENTION

### 1. Field of the Invention

The present invention relates to a blending device, and more particularly to a blending device which is capable of automatically blending and liquefying objects.

### 2. Description of the Related Art

Generally a conventional food waste disposer is a grinder installed under a kitchen sink and connected to drain plumbing to dispose food waste. This kind of grinder is able to process only a small amount of waste and is therefore limited to household applications. Further, the interior of the grinder is almost always dirty, unsanitary, and difficult to clean; the open and exposed waste inlet thereof not only allows both foul odors and loud noises to come out, but also is open to causing danger. Many larger or commercial food waste disposers employ a screw shaft to convey waste through their modules. These contaminated components are unsanitary after use and difficult to clean, and can easily cause bad odors and an infestation of bacteria.

Many conventional automatic animal waste-cleaning devices mainly consist of a waste collection module and a waste storage module. Generally, after an animal excretes at the waste collection module and leaves the waste-cleaning device, a delivery module carries the waste to the waste storage module. After a certain period of time or till the storage module is filled with animal waste, the animal keeper manually removes the waste from the automatic animal waste-cleaning device and disposes it. This kind of cleaning device cannot completely relieve the keeper of the work of removing and disposing the waste, and thus is unable to fulfill the purpose of the device to dispose the waste automatically.

In some automatic animal waste-cleaning devices, the waste in the waste collection module or the waste storage module is mixed with a liquid. A discharge module then extracts and discharges the waste to a predetermined place through a pipe connected to the collection module or the storage module. The keeper therefore does not need to remove the waste from the automatic animal waste-cleaning device and dispose it manually. Though the above cleaning devices may relieve the keeper of waste removal and disposal work, the unprocessed waste may easily stick to and clog the pipe, contaminate the waste collection module and/or the waste storage module, and thus cause foul odors and an infestation of bacteria.

Some automatic animal waste-cleaning devices are further provided with the function of cleaning the waste collection module and the waste storage module. Generally, methods such as spraying water on and circulating water in the modules are adopted, but such means may result in dirt sticking to the modules. Moreover, during the cleaning process, the waste and the added liquid are both exposed to the open air so that they may splash out, their foul odors may disperse into the air, and the generated noises cannot be reduced. Furthermore, after the waste is discharged to a predetermined place, the collection module and the waste storage module are still open to the air; as a result, the smell from the automatic animal waste-cleaning device cannot be completely eliminated. In some devices, chemicals or ozone producing apparatuses are added to rid the devices of the smell, but this increases fabrication and maintenance costs.

Currently, one conventional waste-cleaning device is made into one fixed size and cannot be adjusted to meet the needs of animals of different body sizes, and large-sized cleaning devices take up plenty of space and are not easily accommodated.

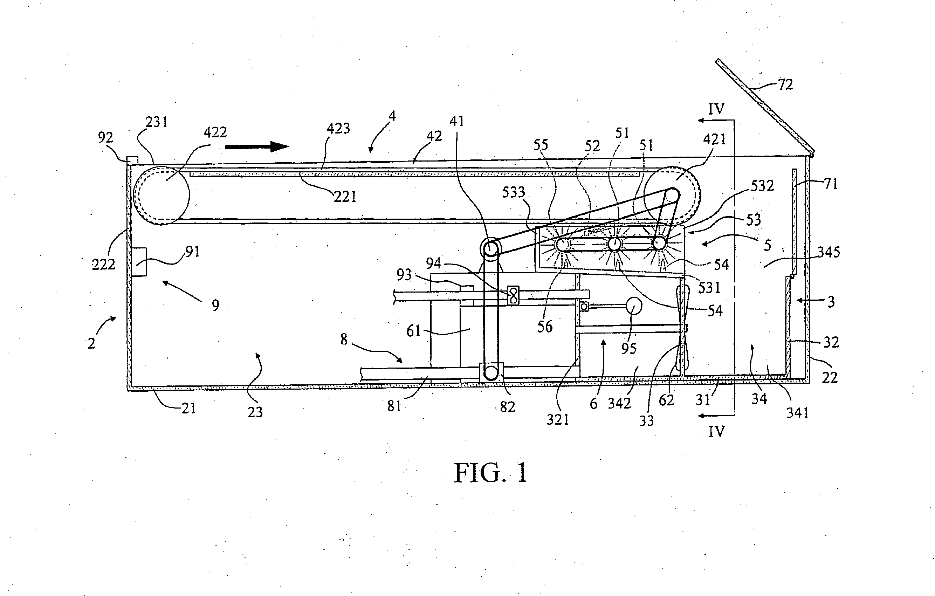

From NL 7603631 A there is known blending device of an animal-waste cleaning machine having an accommodation space ("opvangak 10" in Fig. 1) shaped like a open tube (half pipe) and having a bending tool ("vermalingspomp 7" in Fig. 1) being a mill pump. The animal waste is transmitted into the accommodation space, i.e. the half pipe having no cover, and the animal waste is carried by the water flow in said half pipe to the blending tool. After the animal waste passes through the blending tool ("vermalingspomp 7") one time, the pieces of the animal waste flows into an exit. Because the animal waste only passes through the blending tool one time, the waste cannot be completely blended and liquefied. Further, the accommodation space ("opvangbak 10") which needs to receive the animal waste is half pipe shaped.

(US 3665521 A) discloses a processing tank for a mobile water closet having masticating and grinding waste material.

US 2003 051 672 A discloses an feline excretia processing and elimination system and method, including a cat toilet bowl unit, a reusable cat litter disposed in the cat toilet bowl unit and a multifunctional assembly cooperative with the cat toilet bowl unit for separating cat feces and urine from the reusable cat litter and flushing the cat feces and urine from the cat toilet bowl unit.

The documents US-A-3871331 and US-B2-6561132 disclose prior art blending devices.

The present invention, in accordance with claim 1, is directed to a safe and sanitary blending device which has multiple applications and is capable of automatically self-cleaning and of containing foul odors and loud noises.

The present invention is applicable for automatically blending and liquefying objects. The blending device includes a receiving module, a conveying module, a cleaning module, a blending & liquefaction module, a discharge module, and a control module.

The receiving module defines an accommodation space having an open end. The conveying module has a first driving device and a conveying device. The conveying device may be driven by the first driving device to carry objects to enter the accommodation space through the open end of the receiving module. A vent pipe or a vent cylinder may be added to the receiving module to exhaust the air in the accommodation space so that no air is in the receiving module 3 to impact the substances therein to produce noises during the blending and liquefying process.

The cleaning module may be driven by the first driving device and may have at least one cleaning wheel brush for cleaning the conveying device, at least one drying wheel brush for brushing away the liquid on the conveying device, and a guiding device surrounding all the wheel brushes for guiding substances into the receiving module.

The blending & liquefaction module has a second driving device, and a blending tool installed in the accommodation space and driven by the second driving device to blend and liquefy objects. The discharge module has an extractor for discharging the liquefied objects therein to a predetermined place. The control module has a controller for controlling the conveying module, the cleaning module, the receiving module, the blending & liquefaction module, and the discharge module.

While the conveying module is carrying an object to the receiving module, the cleaning module is rinsing and drying the surface of the conveyor belt. After the object is delivered into the receiving module, the blending & liquefaction module blends and liquefies the object, and then the discharge module discharges the blended and liquefied object to a predetermined place.

The blending device can take various sizes for household, commercial, and industrial uses; the sizes of the parts of the receiving module of a blending device may also be varied to process different amounts and sizes of objects. Furthermore, an extension module may be added in the front of the blending device. The module may move forward and backward to extend and retract the conveying module in order to change the area for bearing objects.

### BRIEF DESCRIPTION OF THE DRAWINGS

FIG. 1 is a cross-sectional side view illustration of a blending device according to the present invention;
FIG. 2 is a partial perspective view illustration of the blending device, wherein a housing is removed to show the configurations of components therein;
FIG. 3 is a top view illustration of the blending device, wherein the configurations of a receiving module and a blending & liquefaction module are shown;
FIG. 4 is a cross-sectional view illustration taken along Section Line IV-IV in FIG. 1, wherein the configurations of a conveying module and a cleaning module are shown;
FIG. 5 is a partial perspective view illustration of the conveyor belt in FIG. 1;
FIG. 6 is a partial top view illustration of the conveyor belt in FIG. 1;
FIG. 7 is a cross-sectional side view illustration of a blending device according to an embodiment of the present invention;
FIG. 8 is a cross-sectional side view illustration of a blending device according to another embodiment of the present invention;
FIG. 9 is a cross-sectional side view illustration of a vent pipe installed on the receiving module;
FIG. 10A is a cross-sectional side view illustration of a vent cylinder installed on the receiving module;
FIG. 10B is an enlarged cross-sectional side view illustration of the vent cylinder in FIG. 10A;
FIG. 11 is a cross-sectional view illustration taken along Section Line XI-XI in FIG. 8;
FIG. 12 is a cross-sectional side view illustration of the blending device with an extension module installed according to the present invention, wherein the configuration of the extension module is shown;
FIG. 13 is a cross-sectional side view illustration of the extension module in FIG. 12 after the module is moved forward;
FIG. 14 is a top view illustration of the blending device in FIG. 12 according to the present invention, wherein some components are removed to show the configuration of a tension module;
FIG. 15 is a cross-sectional side view illustration of the blending device with another extension module installed according to the present invention, wherein the configuration of the extension module is shown;
FIG. 16 is a cross-sectional side view illustration of the extension module in FIG. 15 after the module is moved forward;
FIG. 17 is a side view illustration of the blending device with a first splash-shield extension module installed according to the present invention;
FIG. 18 is a schematic structural view illustration of a second splash-shield extension module when the module is lowered according to the present invention;
FIG. 19 is a schematic structural view illustration of a second splash-shield extension module when the module is raised according to the present invention;
FIG. 20 is a schematic structural view illustration of the third sprayers rinsing the propeller cutting tool of the blending device according to the present invention;
FIG. 21 is a schematic side view illustration of the third sprayers rinsing the propeller cutting tool of the blending device according to the present invention;
FIG. 22 is a cross-sectional side view illustration of the receiving module adopting a vertical circulation pattern according to a second embodiment of the invention; and
FIG. 23 is a cross-sectional view illustration taken along Section Line XXIII-XXIII in FIG. 22;

### DETAILED DESCRIPTION OF THE INVENTION

In order to make the aforementioned and other technical contents, features, and efficacies of the present invention comprehensible, the present invention is described below in detail through embodiments accompanied with figures.

It is noted that throughout the specification, descriptions indicated by the expression "In the automatic animal waste-cleaning device application" are applicable to automatic animal waste-cleaning applications. Descriptions without the expression apply to all applications. Throughout the specification and claims the term "object" refers to any substance, such as, but not limited to, food, waste, food waste, excreta, animal waste, etc., which can be blended and liquefied by the present invention. The term "user" refers to human, animal, etc., that may use the present invention.

Referring to FIGS. 1, 2, and 3, the blending device according to an embodiment of the present invention includes: a housing 2, a receiving module 3, a conveying module 4, a cleaning module 5, a blending & liquefaction module 6, a first cover 71, a second cover 72, a discharge module 8, and a control module 9. The receiving module 3 is installed in the housing 2. The conveying module 4 is installed above the receiving module 3, and the top surface of the conveying module 4 is stretched and exposed. The cleaning module 5 is installed below the conveying module 4. A blending tool 62 of the blending & liquefaction module 6 is installed in the receiving module 3. The first cover 71 is installed on the receiving module 3. The second cover 72 is installed on the housing 2 and rests its one edge on the conveying module 4 when closed. The discharge module 8 is used for discharging the liquid in the receiving module 3. The control module 9 controls the above components so that they operate sequentially.

The housing 2 used for accommodating therein components of other modules has a horizontal bottom housing wall 21 and a surrounding housing wall 22 which extends upward from the periphery of the bottom housing wall 21. The bottom housing wall 21 and the surrounding housing wall 22 together define a housing space 23 which has an open end 231.

The receiving module 3 is installed in the rear portion of the housing space 23 in the housing 2 and has a bottom wall 31, a surrounding wall 32, and a first partition wall 33. The surrounding wall 32 extends upward from the periphery of the bottom wall 31. The first partition wall 33 stands and extends laterally on the top surface of the bottom wall 31. The bottom wall 31 and the surrounding wall 32 together define an accommodation space 34 with an open end 345. The first partition wall 33 divides the accommodation space 34 into a first region 341 and a second region 342 which are adjacent to each other. The receiving module 3 further includes a first circulation port 343 and a second circulation port 344 which are spaced apart from each other by the first partition wall 33 and are in fluid communication with the first region 341 and the second region 342, so that the accommodation space 34 is formed into a circulation space.

Referring to FIGS. 1, 2, 5, and 6, the conveying module 4 has a first driving device 41 and a conveying device 42 which is disposed at the open end 231 of the housing 2. In this embodiment, the first driving device 41 is an electric motor disposed below the conveying device 42, which has a first roller 421 disposed above the open end 345 of the receiving module 3, a second roller 422 axially parallel to and spaced apart from the first roller 421, and a conveyor belt 423 wound around the first roller 421 and the second roller 422 so as to carry objects into the receiving module 3 through the open end 345.

The conveyor belt 423 has a belt body 424, two side bars 425, a plurality of splash-shield sheets 426, and a plurality of movement-resistance bars 427. The two side bars 425 are disposed on the left and the right side edges of the belt body 424 respectively. The splash-shield sheets 426 stand on a surface of the belt body 424 and are spaced apart from one another, and the movement-resistance bars 427 are semi-cylindrical bars disposed on the same surface thereof and spaced apart from one another. The splash-shield sheets 426 and the movement-resistance bars 427 are perpendicularly disposed in a staggered way. The conveying module 4 further has a support plate 221 which is supported by the surrounding housing wall 22 and extends between the first roller 421 and the second roller 422 for bearing the conveyor belt 423 and the objects thereon.

The conveyor belt 423 is driven by the first driving device 41 so as to carry any object on the top surface of the conveyor belt 423 in a first direction (as indicated by the boldest arrow in FIG. 1) to above the receiving module 3. After the conveyor belt 423 carrying an object to above the receiving module 3 bends downward along the circular peripheral of the first roller 421, the object falls off and enters the accommodation space 34 through the open end 345. If the object contains liquid, the side bars 425 of the conveyor belt 423 may confine the liquid thereon, thus preventing the liquid from flowing out of the conveyor belt 423 through the left and the right edges thereof.

The following description further illustrates some functions of the conveyor belt 423. After an object falls from above the conveyor belt 423 and rests thereon, the top end edges 428 of the splash-shield sheets 426 support the solid part of the object; the splash-shield sheets 426 and the movement-resistance bars 427 together prevent the liquid portion of the object from splashing while the object hits the belt body 424 and from spreading by moving back, forth, and/or laterally afterwards. This restricts the contaminated area of the conveyor belt 423 to a small extent so as to facilitate the cleaning and hygiene maintaining work thereafter. The splash-shield sheets 426 are soft, flexible, and very thin sheets, which may support the object without deformation and which may be made of materials such as, but not limited to, rubber. In this embodiment, the top end edges 428 of the splash-shield sheets 426 are flat, but alternatively the top end edges 428 may be shaped into a semicircle, a triangle, or any other forms. Besides, the heights of the splash-shield sheets 426 and the movement-resistance bars 427 may vary depending upon the height from which an object falls.

Moreover, preferably the second roller 422 may be installed higher than the first roller 421 so that the conveyor belt 423 inclines downward in the first direction, thus preventing objects from moving in other directions.

(In the automatic animal waste-cleaning device application, an animal mounts the conveying belt 423 to excrete. The pressure by the animal's foot supporting the weight of the animal can easily bend the splash-shield sheets 426 so that the sheets do not cause discomfort to the animal. Once the pressure is gone, the splash-shield sheets 426 immediately restore their original upright shape.)

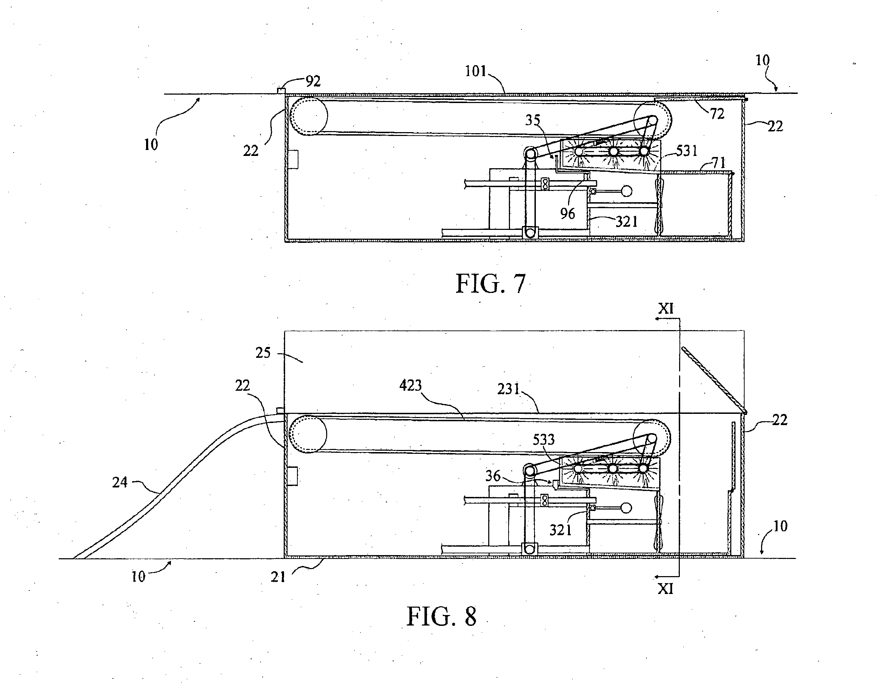

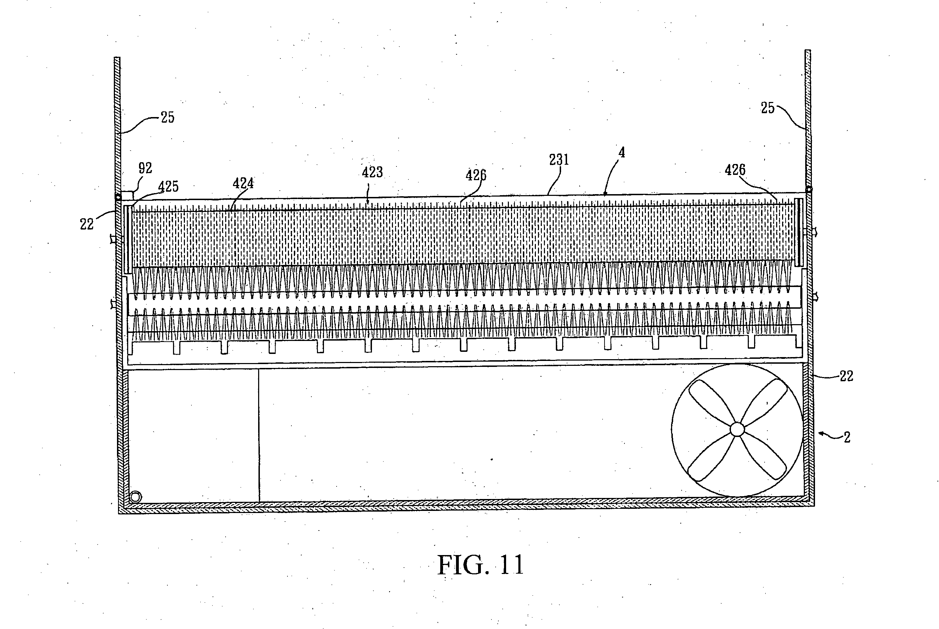

Referring to FIGS. 8 and 11, a splash-shield plate 25 may be added to be pivotally attached to a hinge on either or each of the two lateral sides of the surrounding housing wall 22 so that the splash-shield plate 25 can be disposed perpendicularly and horizontally. While standing perpendicularly, the plate may shield laterally splashing objects. (In the automatic animal waste-cleaning device application, the plate may shield the waste excreted laterally by an animal.)

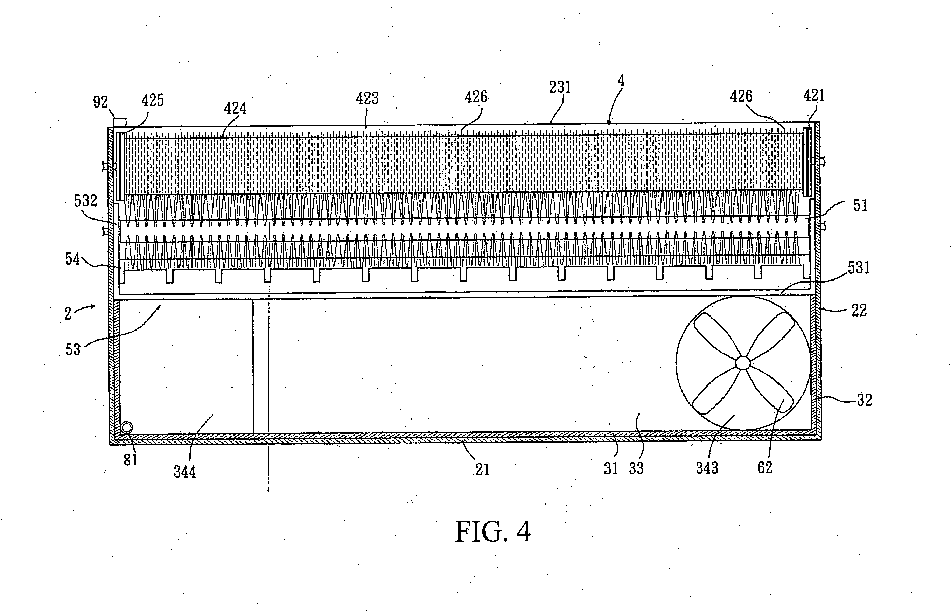

Referring to FIGS. 1, 2, and 4, the cleaning module 5 is disposed below the conveying device 42 for cleaning the contaminated surface of the conveyor belt 423. The cleaning module 5 has at least one cleaning wheel brush 51, at least one first sprayer 52, at least one drying wheel brush 55, a guiding device 53, at least one first substance remover 54, and at least one second substance remover 56. In this embodiment, two cleaning wheel brushes 51 are installed below the conveying device 42, and a plurality of the first sprayers 52 are used for spraying liquid on the cleaning wheel brushes 51 and the surface of the conveying device 42. A drying wheel brush 55 is used for clearing away the liquid on the conveying device 42 after the cleaning wheel brushes 51 clean the surface thereof. The guiding device 53 surrounds the cleaning wheel brushes 51 and the drying wheel brush 55, and guides substances into the receiving module 3. The first substance remover 54 and the second substance remover 56 are installed in the guiding device 53 for clearing away substances on the cleaning wheel brushes 51 and the drying wheel brush 55. The liquid sprayed from the first sprayers 52 may be water or any other liquid that has a better cleaning effect than water so as to help clean and deodorize the modules.

The guiding device 53 has a guiding bottom wall 531, two guiding side walls 532, and a guiding front wall 533. The guiding bottom wall 531 is disposed on the receiving module 3, and inclines and extends downward in the first direction (FIG. 1). The two guiding side walls 532 and the guiding front wall 533 stand on the left, the right, and the front edges of the guiding bottom wall 531 respectively. In this embodiment, two first substance removers 54 and one second substance remover 56 are installed on the guiding bottom wall 531, and extend left and right towards the guiding side walls 532. Each substance remover is a scraper having a hollow bottom which allows substances to go through to enter the receiving module 3 and has a top portion extending to bear against the periphery of each cleaning wheel brush 51 and drying wheel brush 55.

In this embodiment, the cleaning wheel brushes 51, rotating together with the first roller 421 by means of belt transmission and using the liquid sprayed from the first sprayers 52, brush and rinse the surface of the conveyor belt 423. During the process, the first substance removers 54, bearing against the peripheries of the cleaning wheel brushes 51, clear away the substances thereon so as to maintain the brushing and rinsing effects thereof. Meanwhile, the guiding device 53 guides the substances therein into the receiving module 3.

The drying wheel brush 55, rotating together with the cleaning wheel brushes 51 as a whole, brushes away the liquid on the surface of the conveyor belt 423 so as to prevent the liquid from dripping out of the guiding device 53. Moreover, as described before, the second roller 422 may be installed higher than the first roller 421 so that the conveyor belt 423 inclines downward in the first direction (FIG. 1), thereby further preventing the liquid from moving beyond the front edge of the guiding front wall 533. The second substance remover 56, bearing against the periphery of the drying wheel brush 55, clears away the liquid thereon so as to maintain the drying effect thereof.

In this embodiment, the cleaning wheel brushes 51 and the drying wheel brush 55 rotate to clean and dry the surface of the conveyor belt 423 respectively. Alternatively, the conveyor belt 423 may be cleaned and dried through air streaming or blowing, friction by relative movement, or other means. Furthermore, in this embodiment, the first substance removers 54 and the second substance remover 56 are in the form of a scraper to clear away the substances on the wheel brushes. Alternatively, the substance removers may be tools which may achieve the same effect by means of air streaming or blowing, friction by relative movement, or other means.

In this embodiment, the cleaning wheel brushes 51, the drying wheel brush 55, and the first roller 421 are driven to function together as a whole by the first driving device 41 by means of belt transmission. Alternatively, the wheel brushes and the roller can be driven together through gears, chains, or other transmission manners, or can be respectively driven by a respective driving unit.

Referring to FIGS. 1, 3, and 4, the blending & liquefaction module 6 has a blending tool 62 and a second driving device 61 which is installed beside the external wall surface of the surrounding wall 32 of the receiving module 3. The blending tool 62 is installed in the accommodation space 34 and driven by the second driving device 61 to blend and liquefy objects. In this embodiment, the second driving device 61 is an electric motor and the blending tool 62 is a propeller cutting tool axially disposed at the first circulation port 343. Once driven to rotate, the blending tool 62 causes the liquid and the objects in the receiving module 3 to circulate between the first region 341 and the second region 342, and meanwhile blends and liquefies the solid substances passing through the first circulation port 343. The first partition wall 33, the bottom wall 31, the surrounding wall 32, and the rear side edge of the guiding bottom wall 531 of the guiding device 53 together define the round periphery of the first circulation port 343. The tips of the propeller blades of the blending tool 62 are very close to but do not touch the round periphery of the first circulation port 343, thus minimizing the distance between the tips and the periphery thereof so as to achieve efficient circulation of the substances between the first region 341 and the second region 342. Minimizing the distance helps to ensure that the objects is blended and liquefied before they are driven by the blending tool 62 to pass the first circulation port 343. Further, circulating the objects through the first circulation port 343 repeatedly may ensure that the objects are completely blended and liquefied by the blending tool 62, thus enhancing the blending and liquefaction effects.

The blending tool 62 may be installed at any position in the receiving module 3 and the position of the second driving device 61 may be changed depending on that of the blending tool 62. Alternatively, the blending tool 62, instead of being driven by the second driving device 61, may be driven by the first driving device 41 through a gearbox, clockwise/counterclockwise rotation, or other transmission methods under the control of the control module 9. An embodiment example of the above methods is shown in FIG. 1. When the first driving device 41 rotates clockwise, it causes the conveying module 4, the first sprayers 52, the cleaning wheel brushes 51, and the drying wheel brush 55 to function. When the first driving device 41 rotates counterclockwise, it causes the extractor 82 to function. Thus both the number of driving devices and fabrication and maintenance costs are reduced. The blending device may also adopt different transmission mechanisms so that a single driving device can be used to drive all different components.

The blending tool 62 is a propeller cutting tool which rotates to blend and liquefy the solid substances of objects. Moreover, the shape of the first circulation port 343 may vary depending on the operation method of the blending tool 62 so that the receiving module 3 works together with the blending tool 62 to ensure that objects is driven to circulate to be completely blended and liquefied.

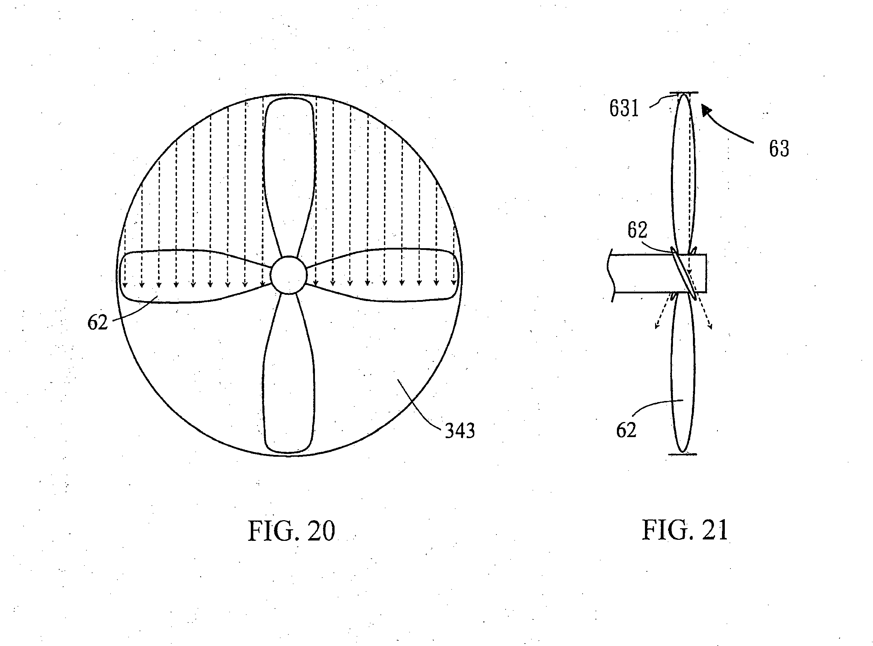

Referring to FIGS. 20 and 21, the blending device may further include a blending tool cleaning device 63. In this embodiment, the blending tool cleaning device 63 is a plurality of third sprayers 631 disposed at corresponding positions on the round periphery of the first circulation port 343, for cleaning the blending tool 62. The third sprayers 631 are used to intensively cleanse the propeller cutting tool thereof by jetting pressured streams of liquid in the form of a water curtain so as to clear away substances such as hairs and fibers, etc., which stick to the blades of the blending tool 62.

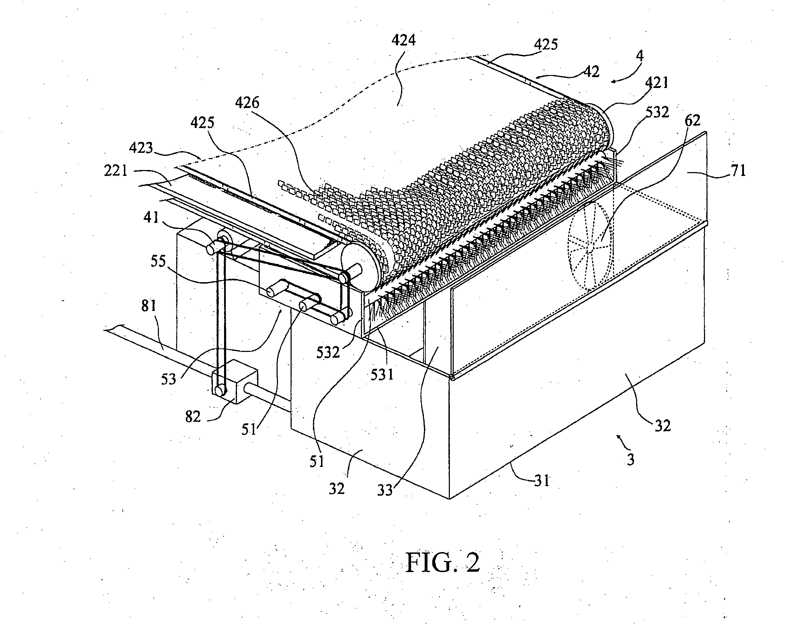

Referring to FIGS. 1 and 2, the first cover 71 is opened and closed under the control of the control module 9. When the first cover 71 is closed, the front edge thereof rests on the rear edge of the guiding bottom wall 531 of the guiding device 53 so as to function with the guiding bottom wall 531 to seal the receiving module 3 and make the whole accommodation space 34 into an airtight space. Moreover, the blending & liquefaction module 6 does not start blending and liquefying objects until the first cover 71 is closed. This not only prevents odorous gas from coming out and prevents substances from splashing out during the blending and liquefying process, but also reduces noises and avoids possible danger of having foreign substances entering the receiving module 3 by accident. Further, to prevent odorous gas from dispersing into the air, the first cover 71 remains sealing the open end 345 of the receiving module 3 while the blending device is not operating. The first cover 71 may be opened and closed through mechanisms of a mechanical transmission apparatus or a common oil/air pressure-driven apparatus. However, the mechanisms will not be described in detail herein.

The second cover 72 is placed above the first cover 71 on the rear end portion of the housing 2 and is pivotally attached to a hinge on the surrounding housing wall 22 thereof. After objects enter the accommodation space 34, the second cover 72, together with the conveying device 42, covers the open end 231 of the housing 2 by resting its front edge on the rear part of the conveying device 42. The second cover 72 works together with the first cover 71 to prevent foreign substances from entering the receiving module 3 by accident and to prevent splashes, noises, and smells during the blending and liquefying process. The mechanism for causing the second cover 72 to open and close is the same as that used for the first cover 71, and will not be described herein.

The discharge module 8 has a communicating pipe 81 which is connected to the surrounding wall 32 and a predetermined place, and an extractor 82 which discharges the blended and liquefied objects in the receiving module 3 via the communicating pipe 81. In this embodiment, the extractor 82 is a pressure pump for extracting and discharging the substances in the receiving module 3. Alternatively, the receiving module 3 may also be pressurized to discharge the substances therein through the communicating pipe 81.

The control module 9 has a controller 91, an initiation detector device 92, an electric current detector 93, a liquid feeder device 94, and a first liquid-level detector 95. The initiation detector device 92 detects objects on the conveying device 42 to actuate the blending device, and detects the volumes of solid objects to decide whether to actuate the blending tool 62. (In the automatic animal waste-cleaning device application, the initiation detector device 92 detects an animal's actions of appearing on, excreting on, and leaving the conveying device 42, and checks the presence of solid waste thereon to decide whether to actuate the blending tool 62.) The electric current detector 93 detects the driving current of the second driving device 61 of the blending & liquefaction module 6. The liquid feeder device 94 is opened and closed under the control of the controller 91, and can automatically close when the liquid pressure in the receiving module 3 increases after the receiving module 3 is full. The first liquid-level detector 95 detects the liquid level in the receiving module 3. In this embodiment, the controller 91 is a programmable logic controller (PLC) 91, the initiation detector device 92 is an infrared sensor for detecting the surface of the conveyor belt 423, and the first liquid-level detector 95 is a float ball.

Referring to FIGS. 1, 2, and 3, after the initiation detector device 92 detects an object on the conveying device 42, it continues to check the presence of any static substance, i.e., any solid object. (In the automatic animal waste-cleaning device application, when an animal appears on the conveying device 42 to excrete waste, the initiation detector device 92 first detects the animal's actions of appearing on, excreting on, and leaving the conveying device 42, and then checks the presence of any static substance, i.e., solid waste.) If no solid object is present, a first operation signal is sent to the controller 91. If a solid object is present, a second operation signal is sent thereto.

Upon receiving a signal, the controller 91 opens the first cover 71 and the second cover 72, and actuates the conveying module 4 and the cleaning module 5. Now, the object is being carried in the first direction to enter the receiving module 3 via the open end 345 thereof, the first sprayers 52 are spraying liquid, the cleaning wheel brushes 51 are cleaning the surface of the conveyor belt 423 that has bent along and run past below the first roller 421, the drying wheel brush 55 is clearing away the liquid on the surface of the conveyor belt 423, and the guiding device 53 is guiding the brushed-off substances into the accommodation space 34.

During the above cleaning process, only after the controller 91 controls the conveying device 42 to run at least half of the total length of the conveyor belt 423 through the cleaning module 5 so that at least half of the surface thereof is cleaned by the cleaning module 5 will the controller 91 stop the conveying module 4 and the cleaning module 5. This is done to ensure that the entire conveyor belt 423 surface that has contacted the object is cleaned. Afterward, the controller 91 closes the first cover 71 and the second cover 72 and proceeds to the blending and liquefying process.

During the above cleaning process, if the liquid guided into the accommodation space 34 reaches a predetermined maximum level, the first liquid-level detector 95 outputs a high liquid level signal to the controller 91, which then actuates the extractor 82 of the discharge module 8 to draw the liquid out of the receiving module 3, thereby both preventing the liquid from overflowing the receiving module 3 and maintaining the liquid level at the highest level.

Furthermore, if the initiation detector device 92 detects that no solid object is on the surface of the conveyor belt 423, after the above cleaning process is finished and the first cover 71 and the second cover 72 are closed, the controller 91 does not actuate the blending & liquefaction module 6 but directly actuates the extractor 82 to empty the receiving module 3 regardless of the liquid level in the accommodation space 34, thus completing the whole process.

During the above cleaning process, if the initiation detector device 92 detects any solid object on the surface of the conveyor belt 423 and the liquid guided into the accommodation space 34 reaches a predetermined maximum level, the controller 91 does not actuate the liquid feeder device 94 to feed liquid into the receiving module 3 after the above cleaning process is finished and the first cover 71 and the second cover 72 are closed. Instead, the controller 91 first actuates the blending & liquefaction module 6 to blend and liquefy the solid object, and then actuates the extractor 82 to discharge the blended and liquefied object into a sanitary sewer or a predetermined place.

During the above cleaning process, if the initiation detector device 92 detects any solid object on the surface of the conveyor belt 423 and the liquid guided into the accommodation space 34 does not reach a predetermined liquid level, the controller 91 actuates the liquid feeder device 94 after the above cleaning process is finished and the first cover 71 and the second cover 72 are closed. When the liquid therein reaches the predetermined liquid level, the first liquid-level detector 95 outputs a signal to the controller 91, which then closes the liquid feeder device 94 and actuates the blending & liquefaction module 6. Meanwhile, the electric current detector 93 detects the operating current of the second driving device 61. When the value of the current is higher than a predetermined value, the electric current detector 93 outputs a high load signal to the controller 91 to indicate that plenty of the solid object is in the receiving module 3 and that the second driving device 61 is bearing a high operating load. The controller 91 then actuates the liquid feeder device 94 again for a certain period of time. Once the liquid ratio increases, the second driving device 61 is actuated to blend and liquefy the solid object again. If the value of the operating current of the second driving device 61 is still higher than the predetermined value, additional liquid is added so as to facilitate the subsequent blending and liquefying process. Alternatively, the second driving device 61 may be set to operate at different rotating speeds so as to enhance the blending and liquefaction effect. The liquid fed through the liquid feeder device 94 may be water or any other liquid which has a better cleaning effect than water to help clean and deodorize the object.

In this embodiment, the initiation detector device 92 is an infrared sensor. Alternatively, the same effect may be achieved by adopting methods of weight sensing, displacement sensing, liquid sensing, image sensing, distance sensing, time sensing, any other sensing, or any combination thereof.

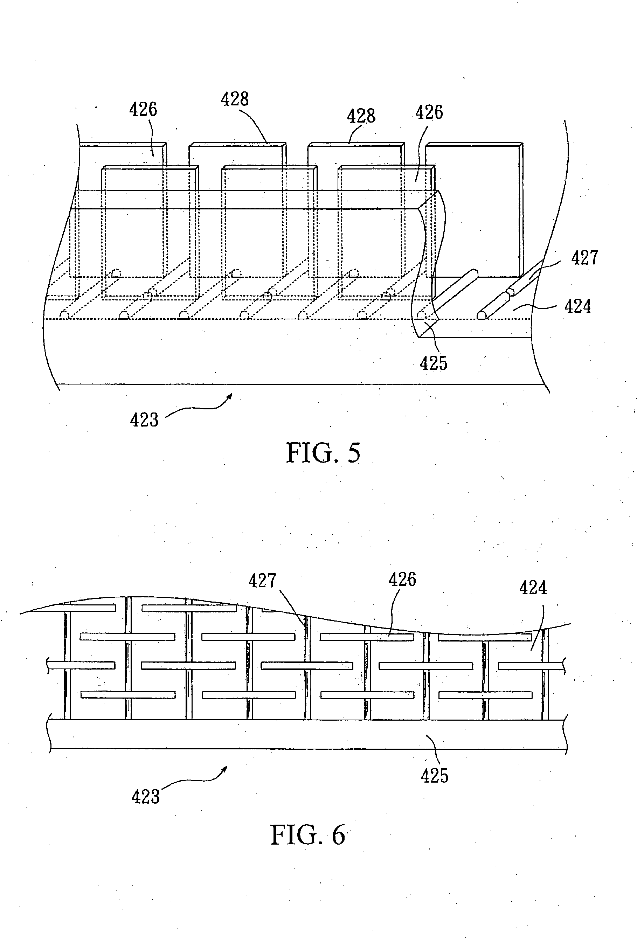

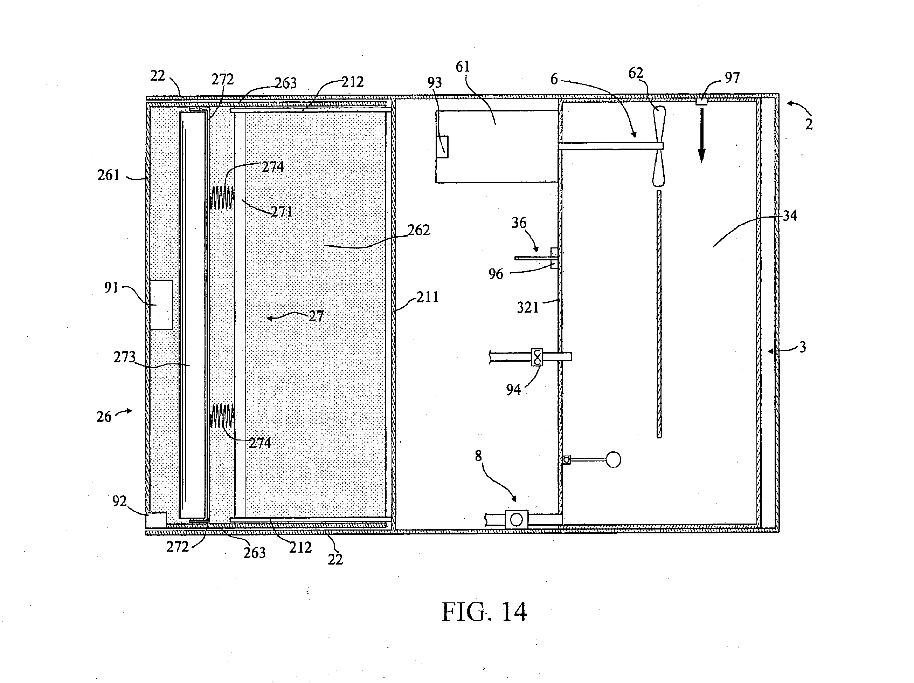

Referring to FIGS. 5, 13, and 14, another object detector 97 may be added to detect the presence and the volume of a solid object so that the initiation detector device 92 detects only the presence of any object for actuating the blending device. (In the automatic animal waste-cleaning device application, the initiation detector device 92 detects an animal's actions of appearing, excreting, and leaving, and is adjustable for detecting the volume of an object.) The object detector 97 is a sensor installed above the open end 345 of the receiving module 3 and on the surrounding housing wall 22. On one lateral surface thereof, the object detector 97 emits an infrared ray, with a very short distance from the ray to the top end edges 428 of the splash-shield sheets 426 on the conveyor belt 423 on the side periphery of the first roller 421, towards the other lateral wall surface (as indicated by the boldest arrow in FIG. 14). Furthermore, the object detector 97 may be adjusted to detect objects of different volumes by adjusting the distance between the infrared ray and the top end edges 428. If no object volume exceeds a predetermined minimum volume, the blending tool 62 will not be actuated and the whole operation ends after the extractor 82 empties the receiving module 3.

Referring to FIGS. 7, 9, and 14, the blending device may further include a second liquid-level detector 96 for detecting the liquid level in a vent pipe 35 which is in fluid communication with the receiving module 3 and is installed at the joint of the upper side edge of the front wall 321 thereof and the guiding bottom wall 531. When the liquid in the vent pipe 35 starts to enter an outlet region 352 from a horizontal region 351 whose horizontal position is at the same height as the highest position of the accommodation space 34, the second liquid-level detector 96 outputs a signal to the controller 91, which then closes the liquid feeder device 94 and actuates the blending & liquefaction module 6.

The operation and efficacy of the vent pipe 35 and the second liquid-level detector 96 will be illustrated in detail below.

In this embodiment, if the initiation detector device 92 detects an solid object on the surface of the conveyor belt 423, only when the first cover 71 and the second cover 72 are not closed and the liquid guided into the accommodation space 34 reaches a predetermined maximum level during the cleaning process will the first liquid-level detector 95 output a high liquid level signal to the controller 91, which then actuates the extractor 82 to discharge the liquid, thereby both preventing the liquid from overflowing the receiving module 3 and maintaining the liquid level at the highest level.

The first liquid-level detector 95 stops detecting after the cleaning process is finished. Then, after closing the second cover 72 and sealing the open end 345 of the receiving module 3 with the first cover 71, the controller 91 actuates the liquid feeder device 94 to feed liquid into the receiving module 3. The entering liquid then pushes the air in the accommodation space 34 out of the receiving module 3 through the extremely thin slit that naturally exists because an outlet lid 353 which rests on the upper end edge of the outlet region 352 does not seal the outlet region 352. Once the receiving module 3 is filled with liquid and the liquid begins to enter the outlet region 352 through the horizontal region 351, the second liquid-level detector 96 outputs a signal to the controller 91, which then closes the liquid feeder device 94 and actuates the blending & liquefaction module 6. During the blending and liquefying process, no air is in the receiving module 3 to impact the substances therein to make noises, thereby further reducing the noises from the blending device. Therefore, this embodiment is especially applicable in family residences and in environments which require minimum noises.

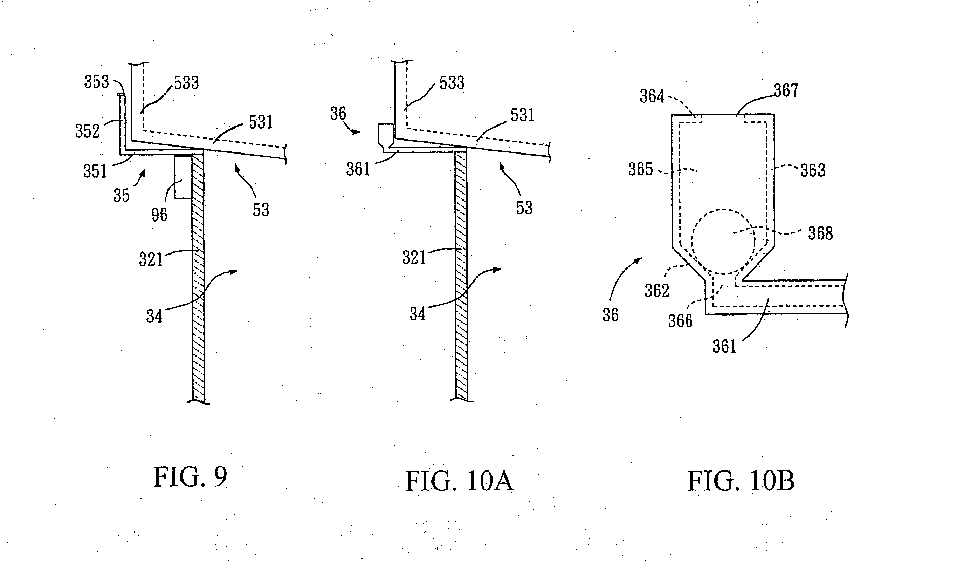

Referring to FIGS. 8, 10A, and 10B, the vent pipe 35 may be replaced with a vent cylinder 36 which may achieve the same effect without the second liquid-level detector 96. The vent cylinder 36 has a horizontal pipe 361, a cylindrical slant wall 362, a cylindrical surrounding wall 363, a cylindrical top wall 364, a lower vent-hole 366, an upper vent-hole 367, and a cylinder space 365 which is defined by the cylindrical slant wall 362, the cylindrical surrounding wall 363, the cylindrical top wall 364, the lower vent-hole 366, and the upper vent-hole 367, and which is positioned higher than the highest horizontal position of the accommodation space 34 and in fluid communication therewith. A float ball 368 having a diameter larger than those of the lower vent-hole 366 and the upper vent-hole 367 is provided in the cylinder space 365. While no liquid is in the cylinder space 365, the float ball 368 rests on but does not seal the cylindrical slant wall 362, and therefore air can pass through the tiny space between the float ball 368 and the cylinder slant wall 362.

After the above cleaning process is finished, the controller 91 actuates the liquid feeder device 94 to feed liquid into the receiving module 3 after the second cover 72 is closed and the open end 345 is sealed by the first cover 71. Then the entering liquid starts pushing the air in the receiving module 3 through the tiny space into the cylinder space 365 and out through the upper vent-hole 367. After filling up the receiving module 3, the entering liquid now enters the cylinder space 365 through the horizontal pipe 361 and raises the float ball 368 to reach, earlier than the liquid, and seal the upper vent-hole 367. At this time, the liquid feeder device 94 closes automatically because the receiving module 3 is full and the liquid feeder device 94 cannot feed in any more liquid. Now the controller 91 actuates the blending & liquefaction module 6. During the blending process, no air is in the receiving module 3 to impact the substances therein to make noises, thereby reducing the noises from the blending device.

In the two previous embodiments, the outlet lid 353 and the float ball 368 cover the upper end edge of the outlet region 352 and the lower vent-hole 366 respectively because of gravity. Furthermore, regardless of which of the previous two embodiments or the other further previous embodiments is adopted, the first cover 71 remains sealing the open end 345 of the receiving module 3 when the blending device is not operating. The above implementations prevent odorous gas from entering the air, thus achieving a sanitary effect.

In the previous two embodiments, the slit between the outlet region 352 and the outlet lid 353 and that between the float ball 368 and the cylindrical slant wall 362 may naturally exist or may be made through cutting out extremely narrow grooves on the upper end edge of the outlet region 352 and on cylindrical slant wall 362 (not shown). The slits allow air to flow from outside into the receiving module 3 when the extractor 82 is operating, thus facilitating discharging liquefied objects. In these embodiments, liquid is fed into the accommodation space 34 and pushes out the air therein. Alternatively, the vent pipe 35 and the vent cylinder 36 can be omitted, and the air may be extracted to create a vacuum therein by an air-extracting device (not shown).

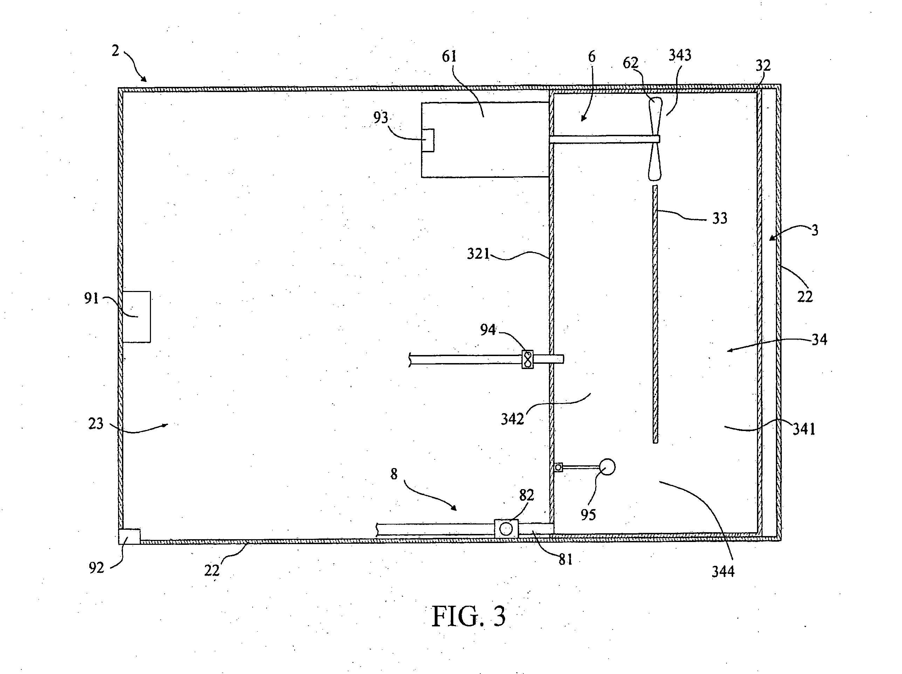

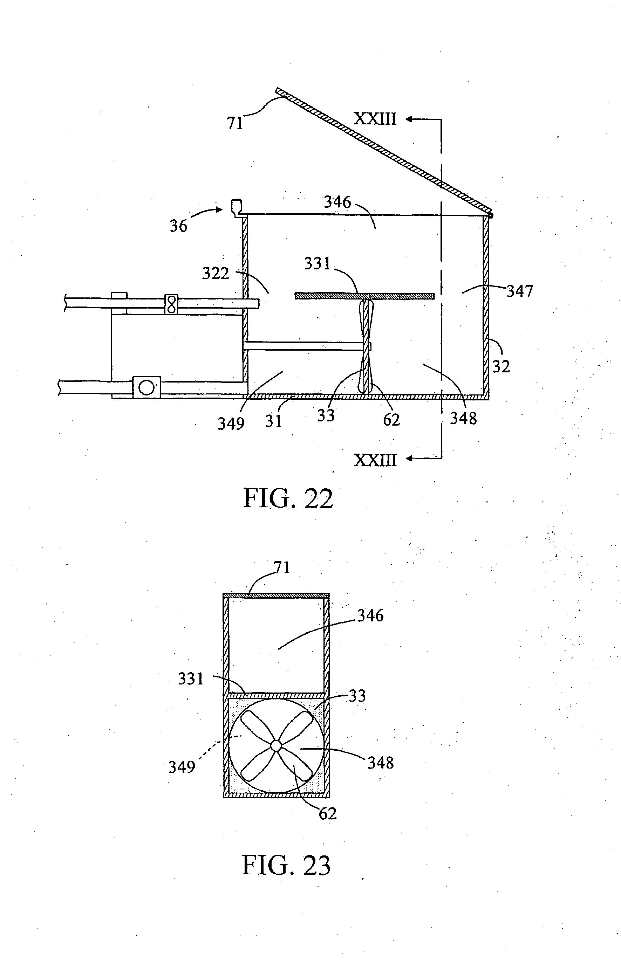

Referring to FIGS. 22, and 23, the blending tool 62 causes the substances in the receiving module 3 to circulate horizontally between the first region 341 and the second region 342 (FIG.3). A vertical circulation pattern to blend and liquefy objects may be employed. In this embodiment, the surrounding wall 32 of the receiving module 3 is extended upward, and a second partition wall 331 is installed horizontally on the first partition wall 33 to partition, together with the first partition wall 33, the accommodation space 34 into a third circulation port 322, a third region 346, a fourth circulation port 347, a fourth region 348, and a fifth region 349. While liquefying objects, the blending tool 62 causes the substances in the receiving module 3 to circulate in a clockwise order through the fifth region 349, the third circulation port 322, the third region 346, the fourth circulation port 347, the fourth region 348, or to circulate the substances counterclockwise in a reverse order. The substances may be circulated horizontally, vertically, or in any other directions.

Referring to FIG. 7, the whole blending device may be installed below a walking plane 10 for users such that the horizontal upper edge of the surrounding housing wall 22 is parallel to and at the same height as the walking plane 10. The device may further include an automatic cover device 100 which includes a plane cover 101 controlled by the controller 91 so that it automatically covers the open end 231 of the housing 2. Once the initiation detector device 92 detects an object near the blending device, the plane cover 101 opens to allow the object to be put on the conveyor belt 423 and closes when the blending device is not operating. (In the automatic animal waste-cleaning device application, when an animal is near the blending device, the plane cover 101 opens to allow the animal to excrete on the conveyor belt 423 and closes after the animal leaves.) Thus, the device does not take up any space above the walking plane and keeps the space above the device visually clear. The plane cover 101 may be replaced by two splash-shield plates 25 of equal dimension (FIG. 8), and the combined area thereof equals that of the plane cover 101. The plane cover 101 and the splash-shield plates 25 may open and close the open end 231 by using a mechanical transmission apparatus or a common oil/air pressure apparatus, etc., and the functioning thereof using different apparatuses will not be described herein.

Referring to FIG. 8, the device may also be disposed on the walking plane 10 with a pedal 24 whose highest horizontal upper edge is parallel to and at the same height as the horizontal upper edge of the surrounding housing wall 22, and the horizontal lower edge of the pedal 24 is parallel to and at the same height as the bottom edge of the bottom housing wall 21, such that a user can easily approach and mount the surface of the conveyor belt 423 to place objects thereon. In this embodiment, the pedal 24 is a slope step. Alternatively, the pedal 24 may be replaced by stairs, an elevator, or any other means. Furthermore, the blending device may be mounted on any carrier that is capable of bearing the weight of the device and the weight thereon.

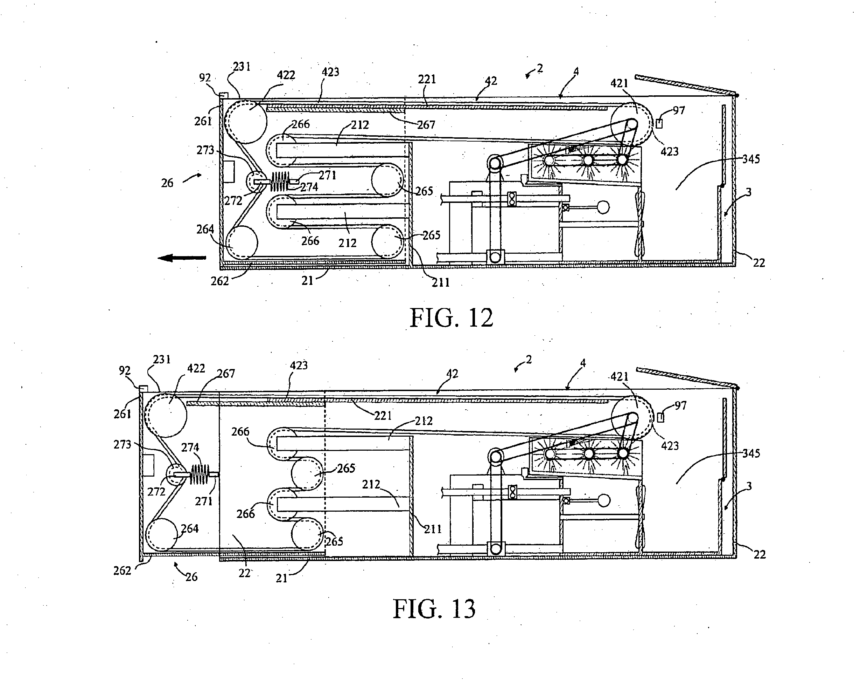

Referring to FIGS. 1, 12, 13, and 14, the blending device may be disposed with a movable extension module 26 for extending/retracting the conveying module 4 to enlarge/reduce the area for bearing objects. The extension module 26 has an extension front wall 261, an extension bottom wall 262, two extension side walls 263, and an extension support plate 267. The extension front wall 261 replaces the surrounding front wall 222 of the surrounding housing wall 22 (FIGS. 1 and 12). The extension bottom wall 262 is installed above the bottom housing wall 21 and joined to the lower side edge of the extension front wall 261. The two extension side walls 263 stand on and join the left and the right sides of the extension bottom wall 262, and are joined to the left and the right side edges of the extension front wall 261. The extension support plate 267 is installed below the support plate 221 and extends leftward and rightward to join the left and the right extension side walls 263.

The extension module 26 further has a tension module 27 which includes a tension support beam 271, a tension roller carrier 272, a tension roller 273, and a plurality of tensioners 274. The tension support beam 271 extends leftward and rightward and is fixed on the extension side walls 263. The plurality of tensioners 274 are installed on the tension support beam 271 and connected to the tension roller carrier 272, whereon the tension roller 273 is installed.

The extension module 26 further has a third roller 264, two fourth rollers 265, and two fifth rollers 266. The third roller 264 and the second roller 422 right above are both axially installed on the extension side walls 263. The two fourth rollers 265 are installed one above the other at the rear part thereof. The two fifth rollers 266 are installed on a plurality of fixed arms 212. The fourth rollers 265 and the two fifth rollers 266 function together to release and retract the conveyor belt 423, which is wound around the first, second, third, fourth, and fifth rollers 421, 422, 264, 265, 266, and the tension roller 273. The two fourth rollers 265 and the two fifth rollers 266 are disposed in a height sequence of, from high to low, one fifth roller 266, one fourth roller 265, the other fifth roller 266, and the other fourth roller 265. The plurality of fixed arms 212 are supported by a fixed plate 211 perpendicularly installed on the bottom housing wall 21.

In this embodiment, the extension module 26 moves towards a second direction (as indicated by the boldest arrow in FIG. 12), and the second, third, and fourth rollers 422, 264, 265, and the tension module 27 move along with the extension module 26 as a whole, thereby shortening the distance between the fourth rollers 265 and the fifth rollers 266 so as to release a portion of the conveyor belt 423 which allows the distance between the first roller 421 and the second roller 422 to extend. Meanwhile, the tensioners 274 keep tightening backward the tension roller 273 on the tension roller carrier 272 so that the whole conveyor belt 423 remains stretched tight. The support plate 221 and the extension support plate 267 together support the part of the conveyor belt 423 which is facing upward for receiving objects. At the same time, the extension bottom wall 262 and the extension side walls 263 together shield the bottom, the left, and the right aerial areas formed by extending the housing 2. Therefore the area for bearing objects is expanded.

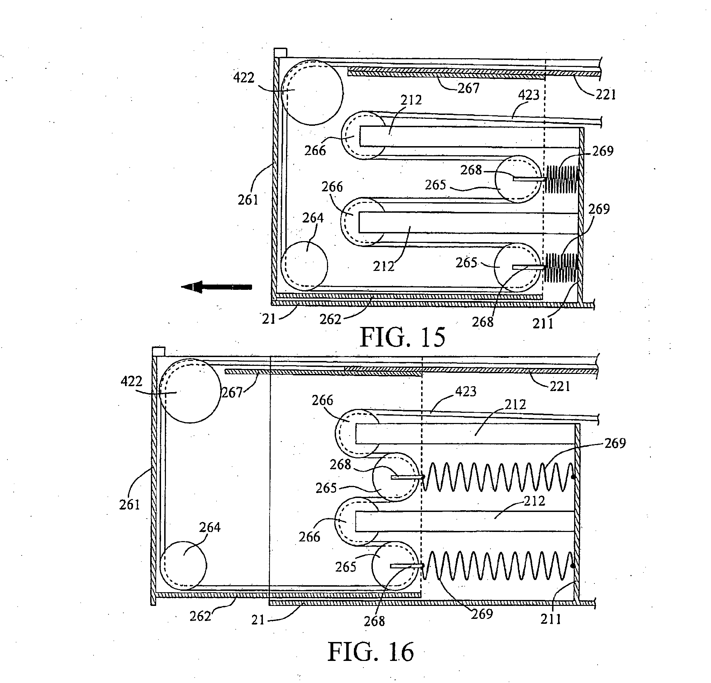

Referring to FIGS. 15 and 16, alternatively the extension module 26 may achieve the same purpose without the tension module 27. Now, the two fourth rollers 265 are installed on two fourth roller carriers 268 which are respectively connected to a plurality of conveyor belt tensioners 269 fixed on the fixed plate 211. The two fourth rollers 265 and the two fifth rollers 266 function together to release and retract the conveyor belt 423, which is wound around the first, second, third, fourth, and fifth rollers 421, 422,264,265,266.

In this embodiment, the extension module 26 moves in the second direction (as indicated by the boldest arrow in FIG. 15). At the same time, the second and third rollers 422, 264 move along with the extension module 26 as a whole so as to cause the conveyor belt 423 to draw the two fourth rollers 265 towards the two fifth rollers 266, thereby shortening the distance between the fourth rollers 265 and the fifth rollers 266 so as to release a portion of the conveyor belt 423. Meanwhile, the tensile force of the conveyor belt tensioners 269 causes the two fourth rollers 265 to keep the conveyor belt 423 stretched tight. Thus the area of the conveyor belt 423 for bearing objects is expanded. In this embodiment, the two fifth rollers 266, like the fourth rollers 265, may also be installed to move forward and backward (not shown). Except for the fact that the tensioners are connected to the front end edge of the fixed arm 212 and to the fifth rollers 266, and the tightening direction is opposite to that of the fourth rollers 265, the rest of the mechanisms are the same. So the details will not be described herein.

In the above two embodiments, two fourth rollers 265 and two fifth rollers 266 are installed. Alternatively, only one fourth roller 265 and one fifth roller 266 may be installed, or their numbers may be equally increased. Therefore the scope of implementation of the blending device is not limited to the numbers of the rollers in this embodiment. Furthermore, both the tensioners 274 and the conveyor belt tensioners 269 are extension springs, but any alternative extendable components may be used.

Moving the extension module 26 forward and backward to release and retract the conveying module 4 not only can meet the needs for different object bearing areas, but also allows the device to be conveniently accommodated. (In the automatic animal waste-cleaning device application, extending and retracting the conveying module 4 may meet the needs of animals of different sizes.)

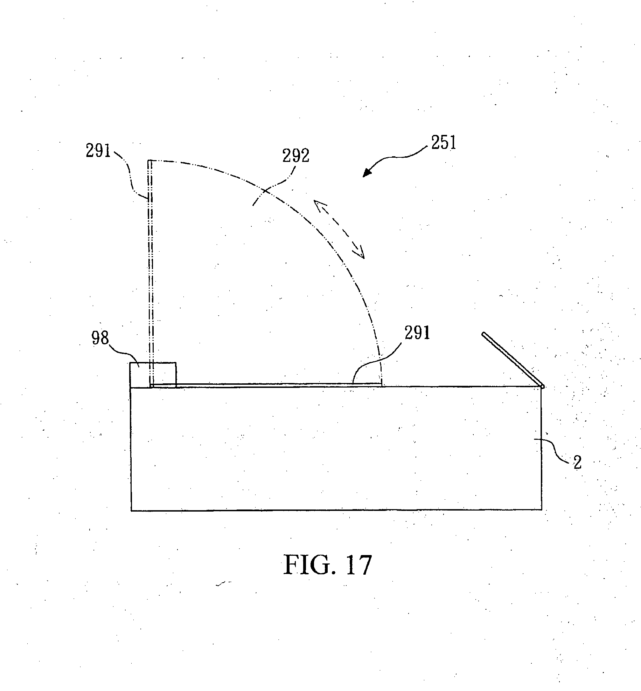

Referring to FIG. 17, the blending device provided by the present invention may further include a first splash-shield extension module 251 which includes at least one splash-shield rod 291, at least one splash-shield extension sheet 292, and a first splash-shield extension controller 98 which is used for causing the splash-shield rod 291 to stand upright and lie flat. When the splash-shield rod 291 is standing upright on one side wall of the blending device, the splash-shield extension sheet 292 is spread into a form of a fan which is vertically disposed on at least one aerial surface above that side wall thereof for shielding laterally splashing objects.

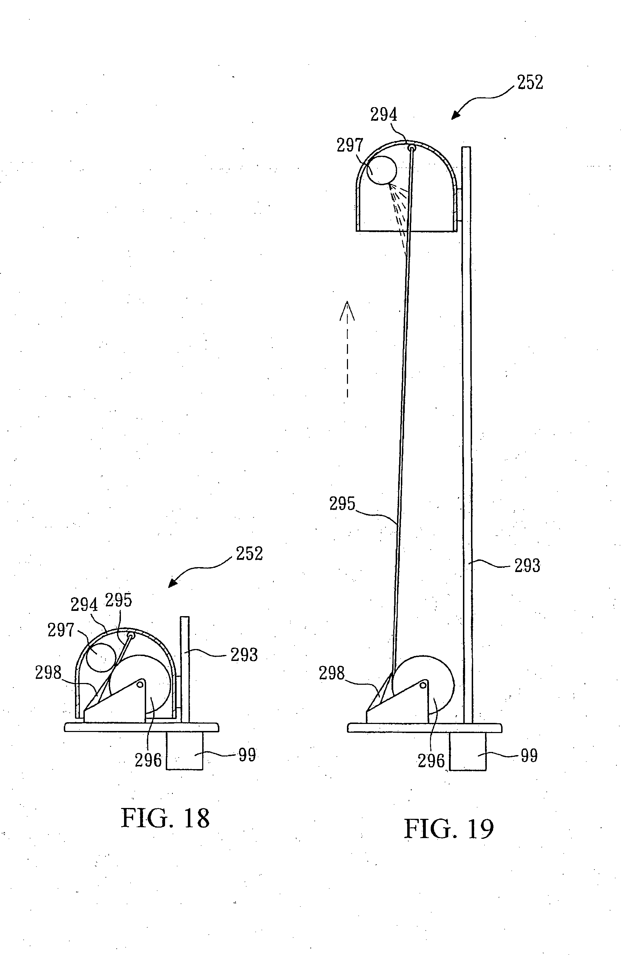

Referring to FIGS. 18 and 19, the blending device provided by the present invention may further include a second splash-shield extension module 252 which includes at least one extension rod 293, at least one splash-shield cover 294, at least one splash-shield extension sheet 295, at least one storage shaft 296, at least one third substance remover 298, at least one second sprayer 297, and a second splash-shield extension controller 99. The second splash-shield extension module 252 is disposed on at least one side of the blending device. The extension rod 293 is connected to the splash-shield cover 294, the second sprayer 297 is disposed in the splash-shield cover 294, the splash-shield extension sheet 295 is rolled and stored on the storage shaft 296, and one end of the splash-shield extension sheet 295 is fixed to the splash-shield cover 294.

The second splash-shield extension controller 99 is used for raising and lowering the extension rod 293 so as to raise and lower the splash-shield cover 294. When the extension rod 293 and the splash-shield cover 294 are raised, the splash-shield extension sheet 295 is vertically spread to shield at least one lateral aerial surface above a vertical side wall of the blending device for shielding laterally splashing objects. The second sprayer 297 then sprays liquid on the splash-shield extension sheet 295 for cleaning the splash-shield extension sheet 295. After the spraying process, the second splash-shield extension controller 99 lowers the splash-shield cover 294 to wind and store the splash-shield extension sheet 295 on the storage shaft 296, and meanwhile the third substance remover 298 bearing against the splash-shield extension sheet 295 clears away the substances thereon. In this embodiment, the third substance remover 298 is a scraper. Alternatively, it may be a brush or any other means that can clear away the substances on the splash-shield extension sheet 295. The liquid sprayed from the second sprayer 297 may be water or any other liquid that has a better cleaning effect than water to help clean and deodorize the module.

(In the automatic animal waste-cleaning device application, the first splash-shield extension module 251 and the second splash-shield extension module 252 may be used for shielding the waste excreted laterally by an animal.)

According to the present invention, the conveying module 4 carries objects into the receiving module 3. Meanwhile, the cleaning module 5 is brushing, rinsing, and drying the surface of the conveyor belt 423 to keep the conveying module 4 clean and dry. After the objects are carried into the receiving module 3, the blending & liquefaction module 6 starts to blend and liquefy the objects. Then, the discharge module 8 discharges the blended and liquefied objects to a predetermined place. Moreover, during the blending and liquefying process, the first cover 71 seals the open end 345 of the receiving module 3, the second cover 72, together with the conveying device 42, covers the open end 231 of the housing 2. This not only prevents odorous gas from coming out and prevents substances from splashing out, but also reduces noises and avoids possible danger of having foreign substances entering the receiving module 3 accidentally, thus enhancing safety.

Furthermore, the air in the receiving module 3 is discharged through the vent pipe 35 or the vent cylinder 36, or through other air extraction methods, so that no air is in the receiving module 3 to impact the substances therein to make noises. Moreover, the extension module 26 moves forward and backward to extend and retract the conveying module 4 so as to meet the needs for different object bearing areas. When the device is not operating, the first cover 71 remains sealing the open end 345 of the receiving module 3, and the outlet lid 353 and the float ball 368 remain covering the upper end edge of the outlet region 352 and the lower vent-hole 366 respectively because of gravity. This prevents odorous gas from entering the air, thus achieving a sanitary effect. Therefore, the operation of the above modules can achieve the objective of the present invention.

In summary a blending device for blending objects is provided. The device includes a conveying module (4), a cleaning module (5),
a receiving module (3), a blending & liquefaction module (6), a discharge module (8), and a control module (9). The conveying module (4) carries objects into the
receiving (5) module (3). While transferring the objects, the conveying module (4) is being rinsed and dried by the cleaning module (5). After the blending & liquefaction module (6) blends and liquefies the objects in the receiving module (3), the discharge module (8) discharges the blended and liquefied objects.

While several embodiments of the present invention have been illustrated and described, various modifications and improvements can be made by those skilled in the art. The embodiment of the present invention is therefore described in an illustrative, but not restrictive, sense intended that the present invention may not be limited to the particular forms as illustrated.

This application claims the priorities under Art 87. EPC from Taiwanese (R.O.C) Patent Application No. TW 20070124276, filed on July 4, 2007 and from Taiwanese (R.O.C) Patent Application No. TW 20070124223, filed on July 3, 2007.

## Claims

1. A blending device, comprising:
a receiving module (3) having an accommodation space (34) and a closable first cover (71) for opening and closing the accommodation space (34), providing access to the accommodation space (34), and containing odor;
a conveying module (4) disposed above the receiving module (3), having a conveying device (42) for conveying objects into the receiving module (3);
a cleaning module (5) disposed below the conveying module (4), for cleaning the conveying device (42);
a blending & liquefaction module (6) having installed in the accommodation space (34) a propeller cutting tool (62) configured to blend and liquely objects in the accommodation space (34) of the receiving module (3) and to meanwhile drive the object to circulate therein after the closable first cover (71) closes the accommodation space (34);
a discharge module (8) for discharging objects in the receiving module (3); and
a control module (9) having a controller (91) for controlling the conveying module (4), the cleaning module (5), the blending & liquefaction module (6), and a discharge module (8).

2. The blending device of Claim 1 wherein the receiving module (3) has a bottom wall (31), a surrounding wall (32) and a first partition wall (33), the surrounding wall (32) extending upwards from a periphery of the bottom wall (31), the first partition wall (33) extending on the bottom wall (31), the accommodation space (34) defined by both the bottom wall (31) and the surrounding wall (32) and being divided by the first partition wall (33) into a circulation space comprising a first region (341), a second region (342), and two circulation ports (343, 344), the two circulation ports spaced apart from each other and being in fluid communication with the first region (341) and the second region (342).

3. The blending device of Claim 1 wherein the conveying device (42) has a first roller (421), a second roller (422), and a conveyor belt (423), the second roller being axially parallel to and spaced apart from the first roller, the conveyor belt wound around the first and the second rollers, the conveyor belt (423) has two side bars (425) disposed on the left and the right side edges thereon.

4. The blending device of Claim 3 wherein the conveyor belt (423) has a plurality of splash-shield sheets (426) disposed on a surface thereof and being spaced apart from one another.

5. The blending device of Claim 3 wherein the conveyor belt has a plurality of movement-resistance bars (427) disposed on a surface thereof and being spaced apart from one another.

6. The blending device of Claim 1 wherein the control module (9) has an initiation detector device (92) for detecting objects on the conveying device (42) and for detecting an user's actions of appearing, placing objects, leaving thereon; the initiation detector device (92) being adjusted to detect the volume of an object.

7. The blending device of Claim 1 wherein the control module (9) has an object detector (97) for detecting objects on the conveying device (42), the object detector (97) being adjusted to detect the volume of an object.

8. The blending device of Claim 1 wherein the cleaning module (5) has a guiding device (53) surrounding the cleaning module (5) and guiding substances into the receiving module (3).

9. The blending device of Claim 1 wherein the control module (9) further has a liquid feeder device (94) for feeding liquid into the receiving module (3), the liquid feeder device (94) being controlled by the controller (91) and automatically stops feeding liquid when the receiving module (3) is filled.

10. The blending device of Claim 1 wherein the control module (9) further has a first liquid-level detector (95) for detecting the liquid level in the receiving module (3).

11. The blending device of Claim 1 wherein the first cover (71) is used for sealing the receiving module (3).

12. The blending device of Claim 1 further comprising a second cover (72) for covering the space above the first cover (71).

13. The blending device of Claim 1 further comprising a second cover (72) disposed above the first cover (71), the second cover (72), together with the conveying device (42), covering the open end of the housing (2) of the blending device by resting its front edge on the rear part of the conveying device (42), wherein the controller (91) configured to open the first cover (71) and the second cover (72) when the conveying device (42) starts working, and close the first cover (71) and the second cover (72) after the conveying device (42) stops working.

14. The blending device of Claim 1 further comprising an extension module (26) for extending/retracting the conveying module (4) to enlarge/reduce the object bearing area.

15. The blending device of Claim 1 further comprising a splash-shield extension module (251) including at least one splash-shield rod, at least one splash-shield extension sheet (292) and a splash-shield extension controller (98), the splash-shield extension controller (98) being used for raising and lowering the splash-shield rod such that the splash-shield extension sheet is unfolded and polded, the splash-shield extension sheet being vertically unfolded on at least one lateral aerial surface of the blending device.

## Patentansprüche

1. Eine Mischvorrichtung, bestehend aus:
einem Aufnahmemodul (3) mit einem Aufnahmeraum (34) und einem schließbaren ersten Deckel (71) zum Öffnen und Schließen des Aufnahmeraums (34), um einen Zugang zum Aufnahmeraum (34) zu schaffen und Gerüche zu hindern;
einem Fördermodul (4), das über einem Aufnahmemodul (3) angeordnet ist, sowie mit einer Förderungsvorrichtung (42) zur Förderung der Gegenstände in das Aufnahmemodul (3);
einem Reinigungsmodul (5), das unter dem Fördermodul (4) zum Reinigen der Förderungsvorrichtung (42) angeordnet ist;
ein Misch- und Verflüssigungsmodul (6), das im Aufnahmeraum (34) installiert und ein Propellerschneidwerkzeug (62) vorgesehen ist, das zum Mischen und Verflüssigen der Gegenstände im Aufnahmeraum (34) des Aufnahmemoduls (3) sowie zum gleichzeitigen Antreiben der Gegenstände konfiguriert ist, um diese im Aufnahmeraum (34) zu zirkulieren, nachdem der Aufnahmeraum (34) mit dem schließbaren ersten Deckel (71) geschlossen wurde;
einem Austrittsmodul (8) zum Austretenlassen des Gegenstands in das Aufnahmemodul (3); und
einem Steuermodul (9) mit einem Regler (91) zur Regelung des Fördermoduls (4), des Reinigungsmoduls (5), des Misch- und Verflüssigungsmoduls (6) und eines Austrittsmoduls (8).

2. Die Mischvorrichtung nach Anspruch 1 wobei das Aufnahmemodul (3) eine untere Wand (31), umgebende Wand (32) und eine erste Trennwand (33) aufweist; sich die umgebende Wand (32) von einer Peripherie der unteren Wand (31) nach oben erstreckt; sich die erste Trennwand (33) auf der unteren Wand (31) erstreckt; der Aufnahmeraum (34) sowohl mit der unteren Wand (31) als auch mit der umgebenden Wand (32) gebildet wird und mit der ersten Trennwand (33) in einen Zirkulationsraum, der einen ersten Raum (341), zweiten Raum (342) und zwei Zirkulieröffnungen (343, 344) aufweist, aufgeteilt ist; die beiden Zirkulieröffnungen (343, 344) in einem Abstand zueinander gebildet und für die Flüssigkeit mit dem ersten Raum (341) und dem zweiten Raum (342) verbunden sind.

3. Die Mischvorrichtung nach Anspruch 1 wobei die Förderungsvorrichtung (42) eine erste Walze (421), eine zweite Walze (422) und ein Förderband (423) aufweist; die zweite Walze axial parallel zur ersten Walze und von dieser in einem Abstand angeordnet ist; das Förderband um die erste und zweite Walzen gewickelt ist; das Förderband (423) zwei Seitenstangen (425) aufweist, die an den linken und rechten Seitenkanten auf dieser montiert sind.

4. Die Mischvorrichtung nach Anspruch 3 wobei das Förderband (423) mehrere Spritzschutzplättchen (426) aufweist, die auf dessen Oberfläche montiert und in einem Abstand zueinander angeordnet sind.

5. Die Mischvorrichtung nach Anspruch 3, wobei das Förderband mehrere bewegungswiderstandsfähige Stangen (427) aufweist, die auf dessen Oberfläche montiert und in einem Abstand zueinander angeordnet sind.

6. Die Mischvorrichtung nach Anspruch 1 wobei das Steuermodul (9) über eine Starterkennungsvorrichtung (92) zum Erkennen der Gegenstände auf der Förderungsvorrichtung (42) sowie zum Erkennen der Vorgehensweisen des Benutzers beim Erscheinen, Auflegen eines Gegenstandes, Liegenlassen eines Gegenstandes verfügt; die Starterkennungsvorrichtung (92) zum Erkennen des Umfangs des Gegenstandes eingestellt ist.

7. Die Mischvorrichtung nach Anspruch 1 wobei das Steuermodul (9) über einen Gegenstanddetektor (97) zum Erkennen der Gegenstände auf der Förderungsvorrichtung (42), wobei der Gegenstanddetektor (97) zum Erkennen des Umfangs eines Gegenstandes eingestellt ist.

8. Die Mischvorrichtung nach Anspruch 1 wobei das Reinigungsmodul (5) über eine Fühningsvorrichtung (53) verfügt, das um das Reinigungsmodul (5) gebildet ist und die Substanzen in das Aufnahmemodul (3) führt.

9. Die Mischvorrichtung nach Anspruch 1 wobei das Steuermodul (9) weiter aus einer Flüssigkeitszufuhrvorrichtung (94) zum Zuführen der Flüssigkeit in das Aufnahmemodul (3) besteht; die Flüssigkeitszufuhrvorrichtung (94) mit dem Regler (91) gesteuert wird, wobei die Zufuhr der Flüssigkeit automatisch gestoppt wird, wenn das Aufnahmemodul (3) aufgefüllt ist.

10. Die Mischvorrichtung nach Anspruch 1 wobei das Steuermodul (9) weiter über einen ersten Flüssigkeitspegeldetektor (95) zum Erkennen des Flüssigkeitspegels im Aufnahmemodul (3) verfügt.

11. Die Mischvorrichtung nach Anspruch 1 wobei das Aufnahmemodul (3) mit dem ersten Deckel (71) abgedichtet wird.

12. Die Mischvorrichtung nach Anspruch 1 weiter bestehend aus einem zweite Deckel (72) zum Zudecken des Raums über dem ersten Deckel (71).

13. Die Mischvorrichtung nach Anspruch 1 weiter bestehend aus einem zweiten Deckel (72), der über dem ersten Deckel (71) angeordnet ist, wobei das offene Ende des Gehäuses (2) der Mischvorrichtung durch Aufliegen von deren vorderen Kante auf das hintere Teil der Förderungsvorrichtung (42) mit dem zweiten Deckel (72) zusammen mit der Förderungsvorrichtung (42) zugedeckt wird, wobei der Regler (91) zum Öffnen des ersten Deckel (71) und des zweiten Deckel (72) bei Beginn des Betriebs der Fördeningsvorrichtung (42) konfiguriert ist und mit dem ersten Deckel (71) und dem zweiten Deckel (72) nach dem Beenden des Betriebs der Förderungsvorrichtung (42) geschlossen wird.

14. Die Mischvorrichtung nach Anspruch 1 weiter bestehend aus einem Erweiterungsmodul (26) zum Verlängern/Zusammenziehen des Fördermoduls (4), um die Tragfläche für den Gegenstand zu vergrößern/verringern.

15. Die Mischvorrichtung nach Anspruch 1 weiter bestehend aus einem Spitzschutz-Verlängeningsmodul (251) mit mindestens einer Spitzschutzstange, mindestens einem Spritzschutz-Verlängerungsplättchen (292) und mit einem Spritzschutz-**Verlängerungsregler (98); mit dem** Spritzschutz-Verlängerungsregler (98) die Spitzschutzstange zum Auf- und Zuklappen des Spritzschutz-Verlängerungsplättchens angehoben und gesenkt wird; das Spritzschutz-Verlängerungsplättchen auf mindestens einer seitlichen Luftfläche der Mischvorrichtung vertikal aufgeklappt wird.

## Revendications

1. Un appareil de mélange, comprenant :
un module de réception (3) ayant un espace de logement (34) et un premier couvercle refermable (71) pour l'ouverture et la fermeture de l'espace de logement (34), donnant accès à l'espace de logement (34), et retenant les odeurs ;
un module de convoyage (4) disposé au-dessus du module de réception (3), ayant un dispositif de convoyage (42) pour transporter des objets dans le module de réception (3) ;
un module de nettoyage (5) disposé sous le module de convoyage (4), pour nettoyer le dispositif de convoyage (42);
un module de mélange & liquéfaction (6) comportant dans l'espace de logement (34) un outil tranchant en forme d'hélice (62) configuré pour mélanger et liquéfier les objets dans l'espace de logement (34) du module de réception (3) et entre-temps amener les objets à circuler à l'intérieur une fois que le premier couvercle refermable (71) ferme l'espace de logement (34) ;
un module d'évacuation (8) pour évacuer les objets dans le module de réception (3) ; et
un module de commande (9) ayant une unité de commande (91) pour contrôler le module de convoyage (4), le module de nettoyage (5), le module de mélange & liquéfaction (6), et un module d'évacuation (8) ;

2. L'appareil de mélange de la revendication 1 dans lequel le module de réception (3) comporte une paroi de fond (31), une paroi d'enceinte (32) et une première paroi de séparation (33), la paroi d'enceinte (32) s'étendant vers le haut à partir d'une périphérie de la paroi de fond (31), la première paroi de séparation (33) s'étendant sur la paroi de fond (31), l'espace de logement (34) défini par à la fois la paroi de fond (31) et la paroi d'enceinte (32) et étant divisé par la première paroi de séparation (33) en un espace de circulation comprenant une première région (341), une seconde région (342), et deux orifices de circulation (343, 344), les deux orifices de circulation étant espacés l'un de l'autre et en communication de fluide avec la première région (341) et la seconde région (342);

3. L'appareil de mélange de la revendication 1 dans lequel le dispositif de convoyage (42) comporte un premier cylindre (421), un second cylindre (422), et une bande transporteuse (423), le second cylindre étant parallèle de façon axiale au premier cylindre et à l'écart de celui-ci, la bande transporteuse enroulée autour des premier et second cylindres, la bande transporteuse (423) comporte deux barres latérales (425) disposées sur les bords latéraux gauche et droit de celle-ci ;

4. L'appareil de mélange de la revendication 3 dans lequel la bande transporteuse (423) comporte une pluralité de feuilles anti-éclaboussures (426) disposées sur une surface de celle-ci et étant espacées les unes des autres ;

5. L'appareil de mélange de la revendication 3 dans lequel la bande transporteuse comporte une pluralité de barres de résistance au déplacement (427) disposées sur une surface de celle-ci et étant espacées les unes des autres ;

6. L'appareil de mélange de la revendication 1 dans lequel le module de commande (9) comporte un dispositif de détection d'initiation (92) pour détecter les objets sur le dispositif de convoyage (42) et pour détecter les actions d'un utilisateur, comme son arrivée, le dépôt d'objets, son départ de celui-ci ; le dispositif de détection d'initiation (92) est réglable pour détecter le volume d'un objet ;

7. L'appareil de mélange de la revendication 1 dans lequel le module de commande (9) comporte un détecteur d'objets (97) pour détecter des objets sur le dispositif de convoyage (42), le détecteur d'objets (97) est réglable pour détecter le volume d'un objet ;

8. L'appareil de mélange de la revendication 1 dans lequel le module de nettoyage (5) comporte un dispositif de guidage (53) qui entoure le module de nettoyage (5) et qui guide les substances dans le module de réception (3);

9. L'appareil de mélange de la revendication 1 dans lequel le module de commande (9) comporte en outre un dispositif d'alimentation de liquide (94) pour alimenter en liquide le module de réception (3), le dispositif d'alimentation de liquide (94) est contrôlé par l'unité de commande (91) et arrête automatiquement l'alimentation en liquide lorsque le module de réception (3) est plein ;

10. L'appareil de mélange de la revendication 1 dans lequel le module de commande (9) comporte en outre un premier détecteur de niveau de liquide (95) pour détecter le niveau de liquide dans le module de réception (3) ;

11. L'appareil de mélange de la revendication 1 dans lequel le premier couvercle (71) est utilisé pour fermer hermétiquement le module de réception (3).

12. L'appareil de mélange de la revendication 1 comprenant en outre un second couvercle (72) pour recouvrir l'espace au dessus du premier couvercle (71) ;

13. L'appareil de mélange de la revendication 1 comprenant en outre un second couvercle (72) disposé au dessus du premier couvercle (71), le second couvercle (72), conjointement avec le dispositif de convoyage (42), recouvrant l'extrémité ouverte du boîtier (2) de l'appareil de mélange en faisant reposer son bord avant sur la partie arrière du dispositif de convoyage (42), dans lequel l'unité de commande (91) est configurée pour ouvrir le premier couvercle (71) et le second couvercle (72) lorsque le dispositif de convoyage (42) commence à fonctionner, et refermer le premier couvercle (71) et le second couvercle (72) lorsque le dispositif de convoyage (42) arrête de fonctionner ;

14. L'appareil de mélange de la revendication 1 comprenant en outre un module d'extension (26) pour le déploiement/retrait du module de convoyage (4) pour augmenter/réduire la surface porteuse des objets ;

15. L'appareil de mélange de la revendication 1 comprenant en outre un module d'extension anti-éclaboussures (251) comprenant au moins une tige anti-éclaboussures, au moins une feuille d'extension anti-éclaboussures (292), et une unité de commande anti-éclaboussures (98), l'unité de commande anti-éclaboussures (98) servant à faire monter et descendre la tige anti-éclaboussures pour déplier et plier la feuille d'extension anti-éclaboussures, la feuille d'extension anti-éclaboussures étant verticalement dépliée sur au moins une surface aérienne de l'appareil de mélange.
